# EUROPEAN PATENT SPECIFICATION

(11) **EP 2 002 598 B1**
(45) Date of publication and mention of the grant of the patent: **26.08.2015**
(21) Application number: 07730661.1
(22) Date of filing: 29.03.2007
(51) Int. Cl.: H04L 12/66, H04L 12/14

(54) **METHOD FOR CONTROLLING CHARGING IN TELECOMMUNICATIONS SYSTEM AND A TELECOMMUNICATIONS SYSTEM**
VERFAHREN ZUR STEUERUNG DER GEBÜHRENBERECHNUNG IN EINEM TELEKOMMUNIKATIONSSYSTEM UND TELEKOMMUNIKATIONSSYSTEM
PROCÉDÉ POUR CONTRÔLER LA FACTURATION DANS UN SYSTÈME DE TÉLÉCOMMUNICATION ET SYSTÈME DE TÉLÉCOMMUNICATION

(30) Priority: 31.03.2006 FI 20065215
(43) Date of publication of application: 17.12.2008
(73) Proprietor: TeliaSonera AB, 10663 Stockholm (SE)
(72) Inventor: ALA-LUUKKO, Sami, 00200 Helsinki (FI); KEISALA, Ilkka, 02710 Espoo (FI); KORHONEN, Jouni, 11100 Riihimäki (FI)
(74) Representative: Kolster Oy Ab
(86) International application number: PCT/FI2007/050174
(87) International publication number: WO 2007/113383

(56) References cited:
- EP-A1- 1 185 118
- WO-A-03/092317
- WO-A1-99/30479
- WO-A2-02/096086
- US-A1- 2003 083 991
- US-A1- 2004 162 818
- US-A1- 2005 239 458

## Description

### FIELD OF THE INVENTION

The invention relates to charging control in a telecommunications system.

### BACKGROUND OF THE INVENTION

Network operators providing telecommunications services offer their clients data services of various types with a variety of terminal equipment. An example of the terminal equipment is a portable computer with a WLAN card enabling a WLAN (Wireless Local Area Network) connection and an activated operator service. Typically terminal equipment of this kind applies time-based charging or fixed, so-called flat rate charging.

New, small terminals have been introduced to the market, which are characterized by including, for instance, GPRS (General Packet Radio Service), 3G (3^{rd} Generation mobile communications) and WLAN functionalities. These devices will be employed with services always-on and the terminals are able to change data connection automatically between different network technologies, for instance, according to a user-defined profile. These services and terminals typically employ volume-based charging, depending on the amount of data transferred, which has been characteristic of charging models used in GPRS and 3G networks. For the services to gain more ground it is important that charging is transparent to the client, whereby, for instance, the use of WLAN is charged on the basis of volume in certain subscription types. As a result, the network operators must agree with one another on both time-based and volume based inter-operator roaming tariffs (IOT).

A problem arises from roaming outside GPRS/3G networks (e.g. WLAN and other IP (Internet Protocol) based access networks), where inter-operator charging is based either on time or volume. Document WO 03/092317 discloses an example of a method and network system for charging an account related to a roaming terminal device. According to the method disclosed, upon registration of the terminal device to a visited data network a network address of a first charging system related to the home data network of the terminal device is transmitted from the home data network to the visited data network. When a network session is established for the terminal device by the second data network, assessing of charge information about the network session will begin in the second data network in a real-time process. A problematic situation is, for instance, where the subscriber has a volume-based subscription, whereas the subscriber's home network operator and the visited network operator have mutually agreed on time-based charging. The subscriber roams in the network of a foreign operator and keeps an always-on terminal switched on all the time and transfers a minimum amount of data. In that case the volume-based charging will not cause much roaming costs to the subscriber. The subscriber's home network operator, however, has to pay the visited network operator a time-based inter-operator roaming charge. In a situation like this, the home network operator may be obliged to pay the visited network operator considerably more than the roaming charge to be billed to the subscriber.

### BRIEF DESCRIPTION OF THE INVENTION

The object of the invention is thus to provide a method and equipment implementing the method such that the above problems can be solved. This is achieved by a method, a system and a network element of a telecommunications network, which are characterized by what is stated in the independent claims 1, 5 and 14. The preferred embodiments of the invention are disclosed in the dependent claims.

The invention is based on the fact that the subscriber's home network informs a visited network what charging principle to apply to a roaming subscriber, whereby the visited network will know which tariff to apply when said subscriber's roaming is charged.

The method and the system of the invention have an advantage that inter-operator charging will correspond to subscriber charging and consequently there is eliminated a risk that an operator must pay more for the services used by a subscriber in the visited network than what is possible to bill to the subscriber.

### DETAILED DESCRIPTION OF THE DRAWINGS

In the following, the invention will be described in greater detail in connection with preferred embodiments, in which
Figure 1 is a simplified block diagram of a telecommunications system, where the invention may be applied, and.
Figure 2 is a signalling diagram in accordance with an embodiment of the invention.

### DETAILED DESCRIPTION OF THE INVENTION

The invention may be applied to various telecommunications systems. These systems include 2^{nd} and 3^{rd} generation mobile systems, such as GSM, GPRS and 3G/UMTS (Universal Mobile Telecommunications System), WLAN and WiMax, or a future wireless system, for instance. Recommendations of mobile systems, and in particular those of the third generation mobile systems, progress fast, and consequently the invention may need additional alterations. All terms and expressions should therefore be interpreted in a broad sense, because their intention is only to illustrate, not to restrict, the invention.

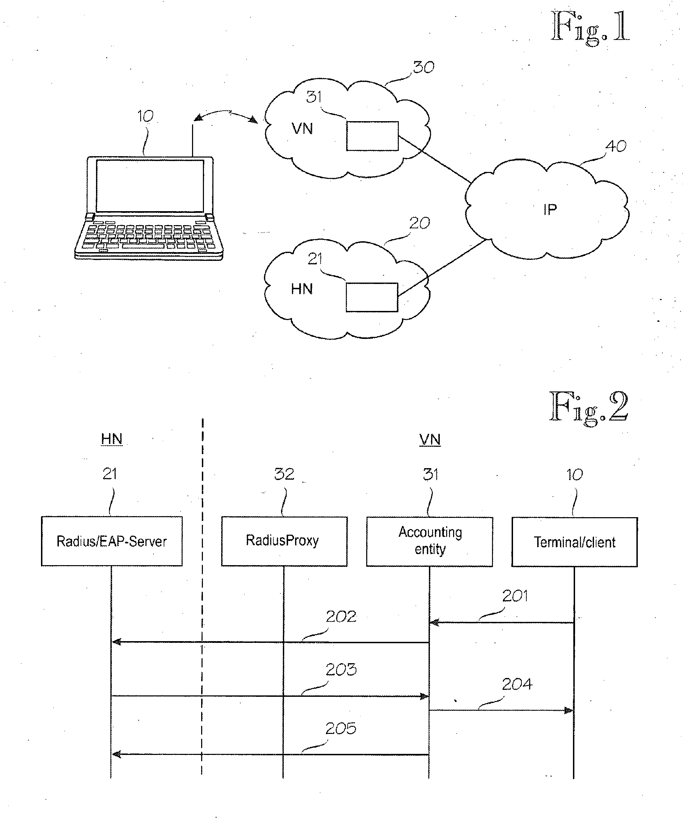

Figure 1 shows an example of system architecture, to which the invention may be applied. It is to be noted that, for the sake of clarity, the figure only shows those components that are relevant to the understanding of the invention. The system of Figure 1 comprises a first telecommunications network 20, which is a subscriber's 10 home network (HN). The concept 'home network' refers in general to a telecommunications network, wherewith the subscriber has a subscription contract and in the home location register or a corresponding user register of which the subscriber is permanently entered. Between the subscriber 10 and the home network there exists a charging relationship such that the home network charges the subscriber not only for services used in the home network but also for services used and charged mainly in connection with roaming in other telecommunications networks, wherewith the home network has a roaming agreement. The services the subscriber 10 has used in the visited network 30, are charged to the home network 20 that, in turn, will further charge the subscriber 10. The terminal of the subscriber 10 (not shown separately) may be any terminal equipment, such as a mobile station, a PDA or a computer, which is provided with suitable means for connection establishment. The terminal of the subscriber 10 is preferably able to use two or more wireless access methods. In the example of Figure 1 the telecommunications network 20 comprises an authentication entity 21, which is, for instance an AAA (Authentication, Authorisation and Accounting) server and which generally responds to authentication requests of subscribers 10 arriving from other telecommunications networks 30. The system of Figure 1 also comprises a second telecommunications network 30, which provides a connection for a visiting subscriber 10. The second telecommunications network 30 comprises an accounting entity 31 or a corresponding network element, which preferably takes care of charging the visiting subscriber 10 for services used and communicates with the home network 20 of the visiting subscriber 10. It is not relevant to the invention which elements of the network 20 or 30 perform the functionality according to the invention and, in this respect, the invention is not limited to the use of any particular network element of any particular system. In addition, the functionality according to the invention may be implemented in the first and/or the second telecommunications network by means of more than one network element. The first and the second telecommunications networks are interconnected, for instance, via an IP network, such as the Internet, or in any other suitable manner. In this connection the concept 'telecommunications network' refers in general to a network whole that is maintained and/or managed by one network operator or service provider and that may comprise, for instance, a public land mobile network (PLMN), which may further comprise a plurality of networks of different types: e.g. a circuit-switched network, such as the GSM, and a packet-switched network, such as the GPRS, and/or a 3^{rd} generation network. In addition, the telecommunications network 20, 30 may comprise, for instance, one or more wireless local networks (WLAN) or other wireless networks, such as WiMax.

As the subscriber 10 attempts to roam in a foreign telecommunications network 30 there is sent an authentication request of the su b-scriber 10 from the visited telecommunications network 30 to the subscriber's 10 home network 21, preferably to an authentication entity 21 or another corresponding network element, and after the subscriber 10 authentication the home network transmits a roaming acceptance notification to the visited network 30, if roaming in said foreign telecommunications network is allowed to said subscriber 10. In accordance with the invention, in connection with transmitting the roaming acknowledgment the home network 20 also transmits information to the visited network on the subscriber's 10 charging type that indicates the basis of charging. In this connection, the concept 'basis of charging' refers in general to a basis or bases for charging. A basis may be, for instance, duration of connection or the amount of transmitted data or a combination thereof. The charging type is then used in the visited network for charging the subscriber for roaming. In accordance with a preferred embodiment of the invention information on the subscriber's charging type is included in the acceptance notification. The acceptance notification may include a specific data field whose value indicates the charging type. The encoding mechanism or format used for indicating the charging type is not relevant to the basic idea of the i n-vention. The information on the subscriber's charging type to be transmitted to the visited network 30 indicates thus the basis of charging, and in accordance with the preferred embodiment of the invention the subscriber's charging type may be one of the following: time-based charging, charging based on the amount of transferred data, content-based charging, event-based charging, charging based on fixed period, i.e. a so-called flat-rate charging (in which a predetermined rate is charged for a predetermined billing period, e.g. fixed charge for a day or a month), location-based charging or a combination of two or more above-mentioned modes. Other charging types may also be used without deviating from the basic idea of the invention. The available charging types are preferably predetermined. Typically the network operators and other corresponding agents agree with one another on tariffs to be applied in roaming, whereby as the arrangement of the invention is employed, an agreement is preferably concluded on the applicable tariffs for different charging types, for instance, for both time-based and volume-based charging.

Figure 2 shows a signalling diagram in accordance with an embodiment of the invention. The figure shows, by way of example, a case in which the subscriber 10 is in the area of a foreign telecommunications network (VN) and desires to roam there using, for instance, a WLAN connection. At first the subscriber 10 sends a roaming request 201 to the visited network, in this example to an accounting entity 31. The accounting entity 31 further sends an authentication request 202 of the subscriber 10 to the home network (HN) of the subscriber 10, whereby the message is conveyed to the authentication entity 21. In the example of the figure it is assumed that RADIUS/EAP (Remote Authentication Dial-In User Service/Extensible Authentication Protocol) protocol is used for communication between the visited network and the home network. Accordingly, Figure 2 also shows a Radius proxy 32 in the visited network. However, the invention is by no means restricted to the use of these protocols, but depending on the system, any protocol may be used. The authentication entity 21, such as RADIUS/EAP server, first identifies the subscriber 10 and checks that the subscriber has access to a service, e.g. WLAN, that the subscriber is requesting. If roaming in said foreign telecommunications network is allowed to the subscriber 10, the authentication entity 21 responds by sending an acceptance notification 203 (Access-Accept) to the visited network. According to a preferred embodiment of the invention the acceptance notification 203 includes information on the subscriber's 10 charging type that indicates the basis of charging. The accounting entity 31 transmits a roaming acceptance notification 204 to the subscriber 10 and starts charging 205 (Accounting Start) by using the basis of charging in accordance with the charging type included in the message 203 and preferably the corresponding predetermined tariff (IOT). The visited network charges the roaming of the subscriber 10 to the home network of the subscriber, which, in turn, bills the subscriber as usual. It is also possible that the subscriber holds two or more charging types that are applicable in different situations or conditions in accordance with predefined criteria.

If the invention is used in connection with Radius or Diameter protocols, for instance, the invention may be implemented, for instance, by providing the protocol with a new attribute for this purpose. Another optional implementation is to use a particular system-specific attribute. In view of the basic idea of the invention it is substantial, however, that information on charging type is possible to convey. Within the attribute there is preferably transferred a data field and a value indicating the charging principle. It is also possible to convey information on the charging type in a separate, dedicated mews-sage so that it is not included in the acceptance notification 203. A dedicated message of this kind may be transmitted in connection with the transmission of the acceptance notification 203.

The above-described functionality of the invention may be implemented by means of appropriate software on a computer or a control device or a corresponding digital signal processing device, such as a general-purpose digital signal processor (DSP). It is also possible to use separate components, such as microcircuits. The invention may be implemented in existing telecommunications network elements, for instance, by means of software update, or by using separate elements or devices. If the functionality of the invention is implemented by means of software, the software may be stored on a computer-readable memory means, from which it may be downloaded to a unit or units executing the software. This is not relevant, however, to the basic idea of the invention.

It is apparent to a person skilled in the art that as technology advances the basic idea of the invention may be implemented in a variety of ways. The invention and the embodiments thereof are thus not restricted to the above-described examples, but they may vary within the scope of the claims.

## Claims

1. A method for controlling charging in a telecommunications system, which comprises a first telecommunications network (20) that is a subscriber's (10) home network, and one or more second telecommunications networks (30), the method comprising:
transmitting an authentication request of the subscriber (10) from the second telecommunications network (30) to the first telecommunications network (20) when the subscriber attempts to roam in the second telecommunications network, and
transmitting from the first telecommunications network (20) to the second telecommunications (30) network a roaming acceptance notification when roaming in said second telecommunications network is allowed to said subscriber (10), **characterized in that** the method further comprises:
transmitting in connection with the acceptance notification information on the subscriber's (10) charging type indicating the basis of charging, and
using in the second telecommunications network (30) the subscriber's (10) charging type transmitted from the first telecommunications network (20) for charging the subscriber for roaming.

2. The method of claim 1, **characterized in that** the information on the subscriber's (10) charging type is included in the acceptance notification.

3. The method of claim 1 or 2, **characterized in that** the subscriber's (10) charging type is one of the following: time-based charging, charging based on data transfer volumes, content-based charging, event-based charging, flat-rate charging, location-based charging or a combination of two or more said types.

4. The method of claim 1, 2 or 3, **characterized in that** the available charging types are predetermined.

5. A system, which comprises a first telecommunications network and a second telecommunications network, whereby
the second telecommunications network (30) is configured to transmit an authorisation request of a subscriber (10) of the first telecommunications network to the first telecommunications network (20) when the subscriber of the first telecommunications network attempts to roam in the second telecommunications network,
the first telecommunications network (20) is configured to transmit a roaming acceptance notification to the second telecommunications network (30) when roaming in said second telecommunications network is allowed to said subscriber (10), **characterized in that**
the first telecommunications network (20) is configured to transmit in connection with the acceptance notification to the second telecommunications network (30) information on the subscriber's (10) charging type indicating a basis of charging, and
the second telecommunications network (30) is configured to use the subscriber's (10) charging type transmitted by the first telecommunications network (20) for charging the subscriber for roaming.

6. The system of claim 5, **characterized in that** the information on the subscriber's (10) charging type is included in the acceptance notification.

7. The system of claim 5 or 6, **characterized in that** the subscriber's (10) charging type is one of the following: time-based charging, charging based on data transfer volumes, content-based charging, event-based charging, flat-rate charging, location-based charging or a combination of two or more said types.

8. The system of claim 5, 6 or 7, **characterized in that** the available charging types are predetermined.

9. The system of any one of claims 5 to 8, **characterized in that** the first telecommunications network (20) comprises one or more wireless networks.

10. The system of claim 9, **characterized in that** the first telecommunications network (20) comprises one or more of the following wireless networks: GSM network, GPRS network, 3G network, wireless local area network, WiMax.

11. The system of any one of claims 5 to 10, **characterized in that** the second telecommunications network (30) comprises one or more wireless networks.

12. The system of claim 11, **characterized in that** the second telecommunications network (30) comprises one or more of the following wireless networks: GSM network, GPRS network, 3G network, wireless local area network, WiMax.

13. The system of any one of claims 5 to 12, **characterized in that** the acceptance notification is an Access Accept message.

14. A network element of a telecommunications network, which is configured
to receive an authentication request of a subscriber (10) of a telecommunications network (20) from a second telecommunications network (30) when the subscriber (10) of the telecommunications network (20) attempts to roam in the second telecommunications network, and
to transmit to the second telecommunications network (30) a roaming acceptance notification, when roaming in said second telecommunications network is allowed to said subscriber (10), **characterized in that**
the network element is further configured to transmit in connection with the transmission of the acceptance notification to the second telecommunications network (30) information on the subscriber's (10) charging type.

## Patentansprüche

1. Ein Verfahren zur Steuerung der Gebührenberechnung in einem Telekommunikationssystem, welches ein erstes Telekommunikationsnetzwerk (20), das ein Heimnetzwerk eines Abonnenten (10) ist, und ein oder mehrere zweite Telekommunikationsnetzwerke (30) aufweist, das Verfahren umfassend:
Senden einer Authentifizierungsanfrage des Abonnenten (10) von dem zweiten Telekommunikationsnetzwerk (30) zu dem ersten Telekommunikationsnetzwerk (20), wenn der Abonnent versucht, sich in dem zweiten Telekommunikationsnetzwerk zu bewegen, und
Senden einer Roaming-Akzeptanz-Benachrichtigung von dem ersten Telekommunikationsnetzwerk (20) zu dem zweiten Telekommunikationsnetzwerk (30), wenn Roaming in dem zweiten Telekommunikationsnetzwerk für den Abonnenten (10) erlaubt ist, **dadurch gekennzeichnet, dass** das Verfahren weiterhin umfasst:
Senden eines, die Basis der Gebührenberechnung anzeigenden, Gebührenberechnungstyps des Abonnenten (10) in Verbindung mit der Akzeptanz-Benachrichtigungs-Information, und
Verwenden in dem zweiten Telekommunikationsnetzwerk (30) den von dem ersten Telekommunikationsnetzwerk (20) gesendeten Gebührenberechnungstyp des Abonnenten (10) zur Berechnung der Roaminggebühren des Abonnenten.

2. Das Verfahren nach Anspruch 1, **dadurch gekennzeichnet, dass** die Information über den Gebührenberechnungstyp des Abonnenten (10) in der Akzeptanz-Benachrichtigung enthalten ist.

3. Das Verfahren nach Anspruch 1 oder 2, **dadurch gekennzeichnet, dass** der Gebührenberechnungstyp des Abonnenten (10) einer der Folgenden ist: zeitbasierende Gebührenberechnung, Gebührenberechnung basierend auf Datenübertragungsvolumen, auf Inhalt basierende Gebührenberechnung, ereignisbasierende Gebührenberechnung, pauschale Gebührenberechnung, standortbasierende Gebührenberechnung oder eine Kombination von zwei oder mehreren der Typen.

4. Das Verfahren nach Anspruch 1, 2 oder 3, **dadurch gekennzeichnet, dass** die verfügbaren Gebührenberechnungstypen vorbestimmt sind.

5. Ein System, welches ein erstes Telekommunikationsnetzwerk und ein zweites Telekommunikationsnetzwerk aufweist, wobei
das zweite Telekommunikationsnetzwerk (30) konfiguriert ist, um eine Autorisierungsanfrage eines Abonnenten (10) des ersten Telekommunikationsnetzwerkes zu dem ersten Telekommunikationsnetzwerk (20) zu senden, wenn der Abonnent des ersten Telekommunikationsnetzwerkes versucht, sich in dem zweiten Telekommunikationsnetzwerk zu bewegen,
das erste Telekommunikationsnetzwerk (20) konfiguriert ist, eine Roaming-Akzeptanz-Benachrichtigung zu dem zweiten Telekommunikationsnetzwerk (30) zu senden, wenn Roaming in dem zweiten Telekommunikationsnetzwerk für den Abonnenten (10) erlaubt ist, **dadurch gekennzeichnet, dass**
das erste Telekommunikationsnetzwerk (20) konfiguriert ist, in Verbindung mit der Akzeptanz-Benachrichtigung zu dem zweiten Telekommunikationsnetzwerk (30) Information über den Gebührenberechnungstyp des Abonnenten (10), der eine Basis der Gebührenberechnung anzeigt, zu senden, und
das zweite Telekommunikationsnetzwerk (30) konfiguriert ist, den Gebührenberechnungstyp des Abonnenten (10), der von dem ersten Telekommunikationsnetzwerk (20) gesendet wird, zu verwenden, um Roaminggebühren des Abonnenten zu berechnen.

6. Das System nach Anspruch 5, **dadurch gekennzeichnet, dass** die Information über den Gebührenberechnungstyp des Abonnenten (10) in der Akzeptanz-Benachrichtigung enthalten ist.

7. Das System nach Anspruch 5 oder 6, **dadurch gekennzeichnet, dass** der Gebührenberechnungstyp des Abonnenten (10) einer der Folgenden ist: zeitbasierende Gebührenberechnung, Gebührenberechnung basierend auf Datenübertragungsvolumen, auf Inhalt basierende Gebührenberechnung, ereignisbasierende Gebührenberechnung, pauschale Gebührenberechnung, standortbasierende Gebührenberechnung oder eine Kombination von zwei oder mehreren der Typen.

8. Das System nach Anspruch 5, 6 oder 7, **dadurch gekennzeichnet, dass** die verfügbaren Gebührenberechnungstypen vorbestimmt sind.

9. Das System nach einem der Ansprüche 5 bis 8, **dadurch gekennzeichnet, dass** das erste Telekommunikationsnetzwerk (20) ein oder mehrere drahtlose Netzwerke umfasst.

10. Das System nach Anspruch 9, **dadurch gekennzeichnet, dass** das erste Telekommunikationsnetzwerk (20) ein oder mehrere der folgenden drahtlosen Netzwerke umfasst: GSM Netzwerk, GPRS Netzwerk, 3G Netzwerk, drahtloses lokales Netzwerk, Wimax.

11. Das System nach einem der Ansprüche 5 bis 10, **dadurch gekennzeichnet, dass** das zweite Telekommunikationsnetzwerk (30) ein oder mehrere drahtlose Netzwerke umfasst.

12. Das System nach Anspruch 11, **dadurch gekennzeichnet, dass** das zweite Telekommunikationsnetzwerk (30) ein oder mehrere der folgenden drahtlosen Netzwerke umfasst: GSM Netzwerk, GPRS Netzwerk, 3G Netzwerk, drahtloses lokales Netzwerk, Wimax.

13. Das System nach einem der Ansprüche 5 bis 12, **dadurch gekennzeichnet, dass** die Akzeptanz-Benachrichtigung eine Zugang-Akzeptiert-Nachricht ist.

14. Ein Netzwerkelement eines Telekommunikationsnetzwerkes, welches konfiguriert ist
um eine Authentifizierungsanfrage eines Abonnenten (10) eines Telekommunikationsnetzwerkes (20) von einem zweiten Telekommunikationsnetzwerk (30) zu empfangen, wenn der Abonnent (10) des Telekommunikationsnetzwerkes (20) versucht, sich in dem zweiten Telekommunikationsnetzwerk zu bewegen, und
um eine Roaming-Akzeptanz-Benachrichtigung zu dem zweiten Telekommunikationsnetzwerk (30) zu senden, wenn Roaming in dem zweiten Telekommunikationsnetzwerk für den Abonnenten (10) erlaubt ist, **dadurch gekennzeichnet, dass**
das Netzwerkelement weiterhin konfiguriert ist, um in Verbindung mit dem Senden der Akzeptanz-Benachrichtigung zu dem zweiten Telekommunikationsnetzwerk (30) Information über den Gebührenberechnungstyp des Abonnenten (10), zu senden.

## Revendications

1. Procédé pour contrôler la facturation dans un système de télécommunications, qui comprend un premier réseau de télécommunications (20) qui est un réseau domestique (10) de l'abonné et un ou plusieurs seconds réseaux de télécommunications (30), le procédé comprenant les étapes consistant à :
transmettre une demande d'authentification de l'abonné (10) du second réseau de télécommunications (30) au premier réseau de télécommunications (20) lorsque l'abonné tente de passer dans le second réseau de télécommunications, et
transmettre du premier réseau de télécommunications (20) au second réseau de télécommunications (30) une notification d'acceptation d'itinérance lorsque l'itinérance dans ledit second réseau de télécommunications est autorisée audit abonné (10), **caractérisé en ce que** le procédé comprend en outre les étapes consistant à :
transmettre, en rapport avec la notification d'acceptation, des informations sur le type de facturation de l'abonné (10) indiquant la base de la facturation, et
utiliser dans le second réseau de télécommunications (30) le type de facturation de l'abonné (10) transmis par le premier réseau de télécommunications (20) pour facturer l'abonné en matière d'itinérance.

2. Procédé selon la revendication 1, **caractérisé en ce que** lesdites informations sur le type de facturation de l'abonné (10) sont comprises dans la notification d'acceptation.

3. Procédé selon la revendication 1 ou la revendication 2, **caractérisé en ce que** le type de facturation de l'abonné (10) est l'un des suivants : facturation en fonction du temps, facturation basée sur les volumes de transfert de données, facturation basée sur le contenu, facturation basée sur les événements, facturation à tarif fixe, facturation basée sur la localisation ou une combinaison de deux ou plusieurs desdits types.

4. Procédé selon la revendication 1, 2 ou 3, **caractérisé en ce que** les types de facturation disponibles sont prédéterminés.

5. Système qui comprend un premier réseau de télécommunications et un second réseau de télécommunications, dans lequel :
le second réseau de télécommunications (30) est configuré pour transmettre une demande d'autorisation d'un abonné (10) d'un premier réseau de télécommunications au premier réseau de télécommunications (20) lorsque l'abonné du premier réseau de télécommunications tente de passer dans le second réseau de télécommunications,
le premier réseau de télécommunications (20) est configuré pour transmettre une notification d'acceptation d'itinérance au second réseau de télécommunications (30) lorsque l'itinérance dans le second réseau de télécommunications est autorisé audit abonné (10), **caractérisé en ce que** :
le premier réseau de télécommunications (20) est configuré pour transmettre, en rapport avec la notification d'acceptation, au second réseau de télécommunications (30) des informations sur le type de facturation de l'abonné (10) indiquant une base de facturation, et
le second réseau de télécommunications (30) est configuré pour utiliser le type de facturation de l'abonné (10) transmis par le premier réseau de télécommunications (20) afin de facturer l'abonné en matière d'itinérance.

6. Système selon la revendication 5, **caractérisé en ce que** les informations sur le type de facturation de l'abonné (10) sont comprises dans la notification d'acceptation.

7. Système selon la revendication 5 ou la revendication 6, **caractérisé en ce que** le type de facturation de l'abonné (10) est l'un des suivants : facturation en fonction du temps, facturation basée sur les volumes de transfert de données, facturation basée sur le contenu, facturation basée sur les événements, facturation à tarif fixe, facturation basée sur la localisation ou une combinaison de deux ou plusieurs desdits types.

8. Système selon la revendication 5, 6 ou 7, **caractérisé en ce que** les types de facturation disponibles sont prédéterminés.

9. Système selon l'une quelconque des revendications 5 à 8, **caractérisé en ce que** le premier réseau de télécommunications (20) comprend un ou plusieurs réseaux sans fil.

10. Système selon la revendication 9, **caractérisé en ce que** le premier réseau de télécommunications (20) comprend un ou plusieurs des réseaux sans fil suivants : réseau GSM, réseau GPRS, réseau 3G, réseau local sans fil, WiMax.

11. Système selon l'une quelconque des revendications 5 à 10, **caractérisé en ce que** le second réseau de télécommunications (30) comprend un ou plusieurs réseaux sans fil.

12. Système selon la revendication 11, **caractérisé en ce que** le second réseau de télécommunications (30) comprend un ou plusieurs des réseaux sans fil suivants : réseau GSM, réseau GPRS, réseau 3G, réseau local sans fil, WiMax.

13. Système selon l'une quelconque des revendications 5 à 12, **caractérisé en ce que** la notification d'acceptation est un message d'acceptation d'accès.

14. Elément de réseau d'un réseau de télécommunications qui est configuré pour :
recevoir une demande d'authentification d'un abonné (10) d'un réseau de télécommunications (20) d'un second réseau de télécommunications (30) lorsque l'abonné (10) du réseau de télécommunications (20) tente de passer dans le second réseau de télécommunications et
transmettre au second réseau de télécommunications (30) une notification d'acceptation d'itinérance lorsque l'itinérance dans ledit second réseau de télécommunications est autorisé audit abonné (10), **caractérisé en ce que** :
l'élément de réseau est encore configuré pour transmettre, en rapport avec la transmission de la notification d'acceptation, au second réseau de télécommunications (30) des informations sur le type de facturation de l'abonné (10).
